Europäisches Patentamt

(19) European Patent Office

Office européen des brevets

(11) Veröffentlichungsnummer: **0 036 921**
**B1**

(12) **EUROPÄISCHE PATENTSCHRIFT**

(45) Veröffentlichungstag der Patentschrift:
**29.09.82**

(51) Int. Cl.³: **C 09 J 7/02, B 65 D 63/10**

(21) Anmeldenummer: **81100103.1**

(22) Anmeldetag: **09.01.81**

(54) **Klebeband.**

(30) Priorität: **01.04.80 DE 3012608**

(43) Veröffentlichungstag der Anmeldung:
**07.10.81 Patentblatt 81/40**

(45) Bekanntmachung des Hinweises auf die Patenterteilung:
**29.09.82 Patentblatt 82/39**

(84) Benannte Vertragsstaaten:
**BE DE FR IT NL**

(56) Entgegenhaltungen:
**DE-A-1 594 241**
**DE-C- 876 066**
**US-A-3 810 813**

(73) Patentinhaber: **Fr. Sander GmbH & Co.,**
**Rudolfstrasse 2-4, D-5600 Wuppertal 2 (DE)**

(72) Erfinder: **Knopp, Johannes, Dietrich-Bonhoeffer-Weg 45,**
**D-5600 Wuppertal 2 (DE)**

(74) Vertreter: **Rieder, Hans-Joachim, Dr.,**
**Corneliusstrasse 45, D-5600 Wuppertal 11 (DE)**

ACTORUM AG

## Klebeband

Die Erfindung betrifft ein Klebeband gemäss Oberbegriff des Anspruchs 1.

Ein derartiges Klebeband ist aus der DE-C Nr. 876066 bekannt. Dort sind die Stabilisierungsfäden vollständig in die Klebstoffschicht eingebettet; sie liegen also zwischen der klebeaktiven Fläche und dem Bandkörper. Eine solche feste Einverleibung macht das Klebeband beschädigungsempfindlich. Die Stabilisierungsfäden sind zu unbeweglich, um Beanspruchungen wie starkem Druck, Stoss- und auch Reibungseinflüssen hinreichend gewachsen zu sein, wenn solche Klebebänder beispielsweise zur Bündelung von Ladegut herangezogen werden. Dem Einsatz der bekannten Klebebänder sind daher Grenzen gesetzt, dies obwohl Klebebandumreifungen gegenüber den klassischen Stahlband-, Kunststoffband-, Seiloder Drahtumreifungen durchaus Vorteile bieten können. So werden besondere Vorrichtungen zum Verknoten, Verschweissen, Verklammern etc. verzichtbar. Es ist wesentlich einfacher, ein Klebeband in einigen Lagen um das Verpackungsgut herumzuschlingen.

Durch die DE-A Nr. 1594241 ist es bekannt, ein Klebeband aus zwei im Randbereich verklebten Papierstreifen zu bilden und die Klebungsverdickung im Mittelbereich durch einzelne in seitlichem Abstand längs verlaufende Stabilisierungsfäden auszugleichen. Durch diese Massnahme lässt sich ein Rollenwickelvorrat gleichmässiger Dicke schaffen. Der gegebenenfalls anzunehmende Poleffekt erscheint gering. Gehalten werden die einen möglichst flachen Querschnitt aufweisenden Fäden durch eine aktivierbare Leimschicht. Selbstkleber als Haftmittel würde den Nachteil bringen, dass der Rücken der nächstfolgenden Klebebandlage in die Zwischenräume zwischen den Stabilisierungsfäden eintaucht, wodurch die einzelnen Fäden isoliert würden.

Aufgabe der Erfindung ist es, ein gattungsgemässes Klebeband in herstellungstechnisch einfacher, jedoch gebrauchsvorteilhaftere Bauform so auszubilden, dass bei hoher Zugbelastbarkeit ein mechanischen Beanspruchungen besser standhaltender Bündelungsumgriff erreicht wird, dies bei höchstmöglicher Bewegungsfreiheit für die Stabilisierungsfäden und gutem Polstereffekt.

Diese Aufgabe ist durch die Merkmalskombination des kennzeichnenden Teils des Anspruchs 1 gelöst.

Die Unteransprüche betreffend vorteilhafte Weiterbildungen des Anspruchs 1.

Die Stabilisierungsfäden sind unter Einhaltung einer grösstmöglichen Beweglichkeit am Klebstoff haftend gehalten. Praktisch der gesamte Fadenquerschnitt bleibt ungetränkt und kann daher bei mechanischen Einwirkungen ausweichen; es besteht eine spontane Bündelfähigkeit der Fäden. Im übrigen entsteht ein äusserst wirksames Polster, welches optimalen Schutz gegen Stoss, Druck, Abrieb und dergleichen bringt. Ausser einer praktisch kantenartigen Anlage des Fadens am Klebstoff befinden sich die Stabilisierungsfäden noch in berührender Anlage zueinander. Sie stützen sich demzufolge gegenseitig ab. Es ist ein zusammenhängendes Polsterkissen erzielt. Zu dieser individuellen Beweglichkeit kommt noch die der Lagenweisen. Die einzelnen Polsterstreifenlagen sind nämlich in bezug aufeinander dadurch beweglich, dass der Mittelbereich der Klebeschicht durch die Stabilisierungsfäden selbst gegenüber der korrespondierenden Partie des übergeordneten Klebebandes klebeneutral gehalten ist. In der Praxis hat sich als vorteilhaft herausgestellt, die Breite des Polsterstreifens so zu bemessen, dass dieser etwa ein Drittel der Gesamtbreite des Klebebandes abdeckt. Da der Polsterstreifen in der Mitte des Bandes verläuft, bleiben beidseitig gleichbreite klebeaktive Zonen, die eine ausreichend verschiebefeste Zuordnung des Klebebandes ermöglichen. Die klebeaktiven Seitenzonen der darübergewickelten Bandlagen überfassen den klebstofffreien Bandrücken praktisch dachförmig, da sich mit Addition der Lagen ein im Querschnitt domförmiger Wulst bzw. eine Art Flachseil ergibt. Ein derartiges Seil hat aber nicht die seiltypischen Nachteile, dass bei Überbelastung aufgrund der Zwirnung eine zum Reissen führende Einschnürung stattfindet. Die Stabilisierungsfäden behalten vielmehr ihre Freiheit, sich den gegebenen räumlichen Verhältnissen innerhalb der Seilzone stets neu anzupassen. Auch ist die neutrale Faser eines solchen durch Addition von Klebebändern erzielten Seiles günstiger. In vorteilhafter Weise besteht jeder Stabilisierungsfaden aus einem dreikardeligen Seil. Die entsprechende Verseilung bzw. Zwirnung kann sehr locker gewählt sein, da schon eine geringe Verdrehung den wünschenswert runden Querschnitt des Stabilisierungsfadens sicherstellt. Ein solcher Faden behält seine Querschnittsform und somit den gewünschten Polstereffekt bei. Infolge der Seildrehung findet auch ein Wechsel der Haftverbindungsstelle der Stabilisierungsfäden statt, so dass nicht die gleichen Filamente durchgehend über die ganze Länge den Klebstoff berühren. Weiter ist es von Vorteil, dass die Stabilisierungsfäden mit grossem Abstand zueinander seilartig umdreht sind derart, dass sie abwechselnd an der einen Seite der Klebebandmittellinie und der anderen Seite der Klebebandmittellinie haften. Dieser Haftwechsel dient ebenfalls dem Ziel, die Beweglichkeit der sowohl die Armierung des Klebebandes als auch das Stossschutzpolster bildenden Stabilisierungsfäden zu optimieren. Ein solches Band eignet sich hervorragend zur Bündelung von Schwerrohren enfach durch Umwickeln in mehreren deckungsgleich aufeinanderliegenden Lagen.

In der Zeichnung ist ein Ausführungs- bzw. Anwendungsbeispiel dargestellt. Es zeigt:

Fig. 1 einen Klebebandabschnitt in Ansicht,

Fig. 2 eine Seitenansicht hierzu,

Fig. 3 eine vergrösserte Teilansicht des Bandes gemäss Fig. 1,

Fig. 4 in schematisierter Wiedergabe einen perspektivisch dargestellten, am Bandkörper haftenden Stabilisierungsfaden,

Fig. 5 einen Querschnitt durch das aus mehreren aufeinander gewickelten Lagen gebildete Klebegurtband unter Andeutung des umreiften Rohrbündels, und

Fig. 6 diese Lagen unter Hervorhebung der Lagebeweglichkeit der aus einzelnen Polsterstreifen gebildeten Seilzone.

Das Klebeband besteht aus einem dünnwandigen Folienstreifen 1, dessen eine Breitfläche 1' mit Klebstoff beschichtet ist. Diese Klebstoffschicht ist mit 2 bezeichnet.

Die den Rücken des Klebebandes bildende Breitfläche 1'' ist klebstofffrei und bezüglich ihrer Oberflächenschaffenheit so gehalten, dass der Folienstreifen zu einer Vorratsrolle aufgewickelt werden kann.

Das Klebeband trägt klebstoffseitig zehn Stabilisierungsfäden a-j. Diese erstrecken sich in Längsrichtung des Bandes. Die zugstabilisierenden Fäden treten mit der Klebstoffschicht 2 in Haftverbindung, und zwar ausschliesslich im Bereich ihrer dieser Schicht 2 zugekehrten Längskante K. Die restliche Umfläche U ist klebstofffrei, ebenso praktisch der gesamte Fadenquerschnitt. Hierdurch behalten die Fäden einen hohen Beweglichkeitsgrad zueinander.

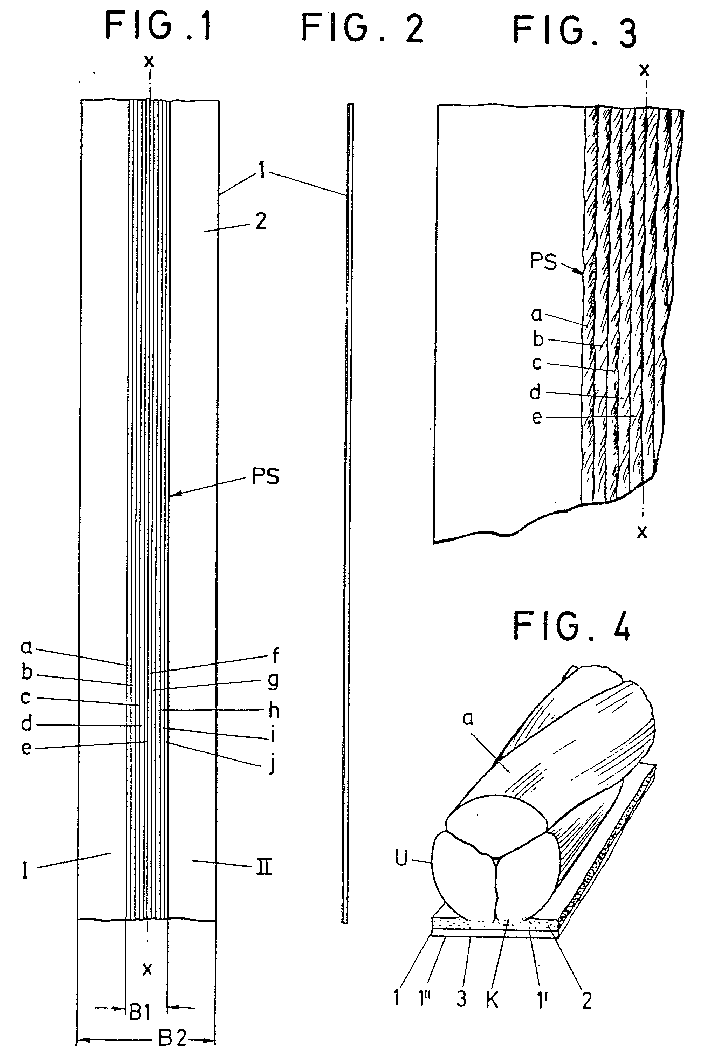

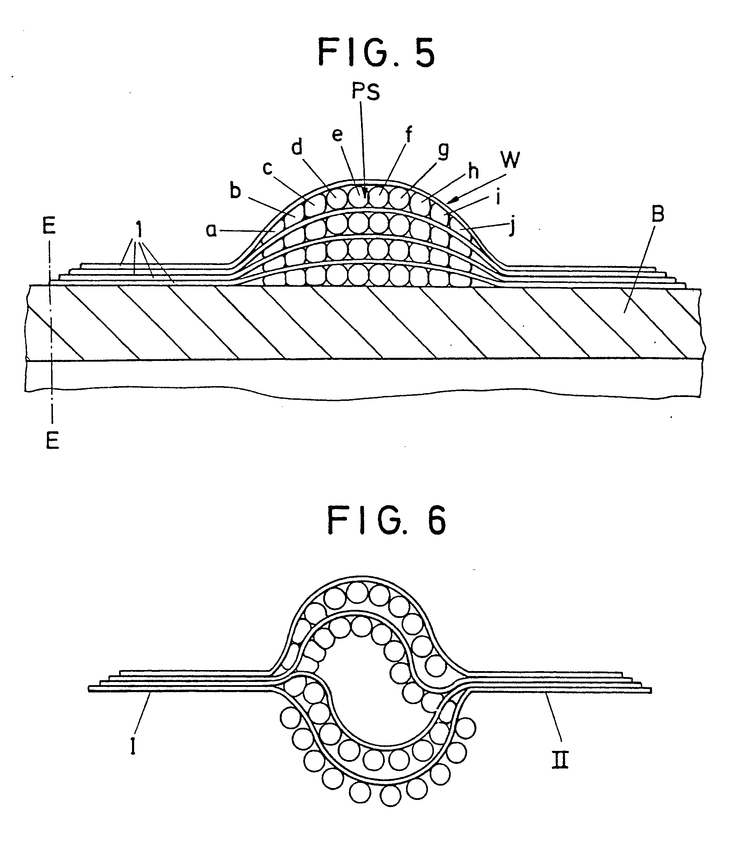

Wie aus Fig. 1 ersichtlich, ist ihre Zuordnung dergestalt, dass sie in der Mitte des Folienstreifens 1 parallel nebeneinanderliegend verlaufen. Die diesbezügliche Fadenschar erstreckt sich über ein Drittel (Breite B 1) der Gesamtbreite B 2 des Folienstreifens 1. Die seitlich dazu liegenden restlichen klebeaktiven Zonen sind mit I und II bezeichnet. Diese bringen die Haftverbindung an den Berührungsstellen des zu umreifenden Rohrbüdels B (vergl. Fig. 5, das Rohr ist nur als Teilabschnitt dargestellt) und zueinander.

Der aus der gewissermassen unverkitteten Schar von Stabilisierungsfäden a-j gebildete Polsterstreifen PS ist schon in seiner einlagigen Zuordnung äusserst beschädigungsunanfällig. Die entsprechende Polsterwirkung erhöht sich, wenn, wie aus Fig. 5 ersichtlich, mehrere Bandlagen in deckungsgleicher Zuordnung übereinander gewickelt werden. Hier entsteht ein entsprechend der Lagenzahl mehr oder weniger weit über die bandverankernden klebeaktiven Zonen überstehender Polsterwulst W (vergl. Fig. 5). Die von den Stabilisierungsfäden abgedeckte mittlere Bandzone spannt sich pro Lage in immer stärker gewölbten Lagen übereinander. Die Fadenschar erfüllt dabei zugleich die Funktion eines Trennmittels, so dass diese Mittelzonen auch schichtweise beweglich bleiben. Es wird auf Fig. 6 verwiesen, bei der ein vom Bündel gelöster Abschnitt einfach unter Erfassen der klebeaktiven Zonen I, II in Richtung der Mittelebene gegeneinander gedrückt wird.

Die mittleren, die Stabilisierungsfäden a-j tragenden Zonen stellen sich dabei voneinander ab. Daraus ist erkennbar, dass die Zonen untereinander eine grosse, mechanische Beanspruchungen parierende Beweglichkeit aufweisen. Das gleiche gilt in bezug auf die nebeneinanderliegenden, enzelnen Stabilisierungsfäden. Diese können unabhängig voneinander ausweichen, dies beispielsweise, wenn spitze Gegenstände wie Steine oder dergleichen in den Polsterwulst einzudringen versuchen. Entsprechend abgefedert werden auch seitlich wirkende Stösse aufgenommen, da die Fadenschar die Fähigkeit behält, sich unter Lösen von der Haftstelle sowie unter Ausweichen praktisch stets neu zu bündeln. Eine entsprechende Ausweichbewegung wäre bei Einbettung und der damit zusammenhängenden vollständigen Verkittung der Fäden mit dem Klebstoff nicht gegeben. Sie würden einzeln nacheinander beschädigt bzw. zerrissen oder zerquetscht.

Der im Querschnitt dom- oder dachförmige Polsterwulst bringt es auch mit sich, dass die sich übereinander reibungsfest verankernden klebeaktiven Zonen nicht auf einer gleichen Kantenebene E-E enden, sondern treppenförmig in Richtung des Wulstes W ansteigen, vermeidet am Bandrand eine grössere Angriffsfläche, beispielsweise bei Verrutschen oder dem Auftreffen irgendwelcher Gegenstände wie Wagenrungen oder dergleichen. Selbst wenn das die Umreifung etagenartig aufbauende Klebeband, d. h. der Folienstreifen 1 aufgerissen würde, vürde keine entscheidende nachteilige Beeinträchtigung der Zugfesttigkeit bzw. Belastung der Umreifung auftreten.

Zur Bildung der Stabilisierungsfäden a-j ist von sogenanntem Filamentgarn ausgegangen. Jeder der berührend parallel nebeneinander verlaufenden Stabilisierungsfäden besteht aus einem dreikardeligen Seil mit 192 Filamenten. Die Verseilung ist locker gehalten im Sinne einer hochgradigen Beweglichkeit bis hin zu den Filamentgruppen.

Die erläuterte Zuordnung der Stabilisierungsfäden kann in bestimmten Fällen auch dahingehend abgewandelt werden, dass die Fadenschar auf Abständen von 200 bis max. 400 mm, also an mit grossem Abstand zueinander liegenden Stellen seilartig umtritt derart, dass die auf der einen Seite der Klebebandmittellinie x-x verlaufenden Fäden a-e auf die f-j der anderen Klebebandseite überwechseln, dies um auch bezüglich der Stabilisierungsfäden insgesamt eine möglichst an verschiedenen Stellen auftretende Klebstoffbenetzung zu erhalten.

Die Verwendung von 10 Stabilisierungsfäden wurde im Hinblick auf die bei Lagenaddition vorliegenden Abdeckverhältnisse zum restlichen klebeaktiven Bereich des Bandes als praxisgerecht ermittelt. Das Band wird in vier Lagen unter gewisser Spannung um das zu umreifende Gut herumgelegt. Durch die entsprechende Spannung strafft sich sowohl die Armierung als auch das Klebeband. Die Verbindungen der Gesamtumreifung entsteht durch die Klebeverbindung und die Reibung der einzelnen Lagen untereinander. Das Ende der Umreifung braucht lediglich angedrückt zu werden, um den gewünschten Endlosumreifungseffekt zu erzielen. Es ist eine äusserst wirtschaftlich herzustellende Umreifung ohne Schwachstellen erzielt. Die Verseilung der Stabilisierungsfäden a-j im Zusammenwirken mit der losen Zuordnung dieser zueinander, dazu die seitliche Festlegung über die klebeaktiven Zonen des Folienstreifens 1 bilden einen optimalen Schutz gegen Stoss und Abrieb, da die Gesamtheit der Stabilisierungsfäden nur eine geringe Angriffsfläche bietet und einem Stoss oder Druck ausweichen kann.

## Patentansprüche

1. In mehreren deckungsgleich aufeinander gewickelten Lagen zur Bündelung von Schwerrohren oder dergleichen einsetzbares Klebeband mit vom Klebstoff gehaltenen, in Längsrichtung verlaufenden Stabilisierungsfäden, dadurch gekennzeichnet, dass die ausschliesslich einen mittleren Polsterstreifen (PS), dessen Breite (B 1) etwa einem Drittel der Gesamtbreite (B 2) entspricht, bildenden Stabilisierungsfäden (a-j) ausschliesslich im Bereich ihrer dem Band zugekehrten Längskante (K) vom Klebstoff (2) benetzt und im Bereich ihrer übrigen Umfläche (U) klebstofffrei und zueinander beweglich sind und berührend nebeneinander verlaufen.

2. Klebeband nach Anspruch 1, dadurch gekennzeichnet, dass jeder der Stabilisierungsfäden (a-j) aus einem dreikardeligen Seil besteht.

3. Klebeband nach Anspruch 1, dadurch gekennzeichnet, dass die Stabilisierungsfäden (a-j) an mit grossem Abstand zueinander liegenden Stellen seilartig zueinander umtreten derart, dass die auf der einen Seite der Klebebandmittellinie (x-x) verlaufenden Fäden (a-e) auf die (f-j) der anderen Klebebandseite überwechseln.

## Claims

1. An adhesive strip which can be applied as a plurality of wound layers evenly superimposed, for bundling of heavy pipes or the like, with stabilizing threads held by adhesive and extending in the longitudinal direction, characterized in that the stabilizing threads (a-j) forming exclusively a central cushioning band, the width (B1) of which corresponds to about ⅓ of the total width (B2), are moistened by the adhesive (2) exclusively in the zone of their longitudinal edge (K) facing the strip, and are free of adhesive in the zone of their remaining circumferential surface (U) and are movable relatively to one another, and extend in touch with one another.

2. Adhesive strip according to Claim 1, characterized in that each of the stabilizing threads (a-j) consists of a three-strand cord.

3. Adhesive strip according to Claim 1, characterized in that the stabilizing threads (a-j) pass over one another in a cord-like manner at places spaced a large distance apart, in such a way that the threads (a-e) running on one side of the centre line (x-x) of the adhesive strip change places with those (f-j) on the other side of the adhesive strip.

## Revendications

1. Bande adhésive destinée à être enroulée en plusieurs couches superposées sur des tuyaux lourds ou analogues, avec des fils de stabilisation s'étendant longitudinalement et maintenus par un adhésif, caractérisée en ce que les fils de stabilisation (a-j), qui forment exclusivement une nappe médiane (PS) dont la largeur (B1) correspond à environ un tiers de la largeur totale (B2), sont imbibés de produit adhésif (2) exclusivement dans la zone de leurs bords longitudinaux (K) tournés vers la bande, et sont exempts d'adhésif dans leurs surfaces restantes (U) qui sont en contact l'une avec l'autre et mobiles l'une par rapport à l'autre.

2. Bande adhésive suivant la revendication 1, caractérisée en ce que chacun des fils de stabilisation (a-j) est constitué par un câble à trois brins.

3. Bande adhésive suivant la revendication 1, caractérisée en ce que les fils de stabilisation (a-j) sont inversés entre eux à la manière d'un câble, en des emplacements espacés à grande distance, de telle sorte que les fils (a-e) qui s'étendent sur un côté de l'axe longitudinal médian (x-x) de la bande adhésive soient interchangés avec les fils (f-j) se trouvant sur l'autre côté de la bande.

# FIG.1

# FIG. 2

# FIG. 3

# FIG. 4

# FIG. 5

# FIG. 6